# EUROPEAN PATENT SPECIFICATION

(11) **EP 1 408 708 B1**
(45) Date of publication and mention of the grant of the patent: **28.12.2005**
(21) Application number: 02022802.9
(22) Date of filing: 11.10.2002
(51) Int. Cl.: H04Q 7/32, H04M 1/725, H04L 12/56

(54) **Battery charging apparatus capable of connecting a mobile phone with a wire telephone network and method for enabling the same**
Batterieladevorrichtung, und entsprechendes Verfahren, zur Verbindung eines Mobilfunkendgeräts mit einem telefonischen Festnetz
Chargeur de batterie, et méthode correspondante, pour connecter un téléphone mobile avec un réseau téléphonique fixe

(43) Date of publication of application: 14.04.2004
(73) Proprietor: SAMSUNG ELECTRONICS CO., LTD., Suwon-City, Kyungki-do (KR)
(72) Inventor: Park, Joung-Kyou, Socho-gu, Seoul (KR); Cho, Dong-Jun, Suji-up, Yongin-shi, Kyonggi-do (KR)
(74) Representative: Grünecker, Kinkeldey, Stockmair & Schwanhäusser Anwaltssozietät

(56) References cited:
- US-A- 5 526 402
- US-A- 5 887 259
- US-A- 2001 031 645
- US-A1- 2002 106 994
- "Specification of the Bluetooth System - Wireless connections made easy - Profiles - Version 1.1: Part K:3 Cordless telephony profile" SPECIFICATION OF THE BLUETOOTH SYSTEM - WIRELESS CONNECTIONS MADE EASY - PROFILES, 22 February 2001 (2001-02-22), pages 99-144, XP002227212
- "BlueStation-A100: Bluetooth LAN & PSTN Access Point" CLIPCOMM BLUETOOTH MOBILE ACCESS PRODUCTS, [Online] 23 August 2001 (2001-08-23), XP002227213 Retrieved from the Internet: <URL:http://www.clipcomm.co.kr/products/a1 00.pdf> [retrieved on 2003-01-13] & "CLIPCOMM exhibited in COMDEX Korea 2001 (8/23-8/26)" CLIPCOMM COMPANY NEWS, [Online] 27 August 2001 (2001-08-27), Retrieved from the Internet: <URL:http://www.clipcomm.co.kr/home/read.p hp3?num=93&page=1&page_list=1&type=eng???? > [retrieved on 2003-01-13]
- "Owner's Manual" UNIDEN CORDLESS PHONE TRU4485-2, [Online] 10 June 2002 (2002-06-10), pages 2-7, XP002227214 Retrieved from the Internet: <URL:http://www.uniden.com/pdf/TRU4485-2om .pdf> [retrieved on 2003-01-13] & "Uniden 2002 Cordless line offers "Total Solution"" UNIDEN PRESS RELEASE, [Online] 10 June 2002 (2002-06-10), Retrieved from the Internet: <URL:http://www.uniden.com/press/ACF267.pd f> [retrieved on 2003-01-13]

## Description

The present invention relates to a battery charging apparatus for a mobile phone, and more particularly to a battery charging apparatus having a Bluetooth module.

In general, a mobile phone is used more frequently outdoors and is used only in receiving a phone call indoors where a wire telephone is provided. In other words, since a call charge for a mobile phone is more expensive than a call charge for a usual wire telephone, it may be rather burdensome for a user to use a mobile phone indoors in place of a wire telephone when making a phone call.

However, although the call charge for a mobile phone is more expensive than the call charge for a usual wire telephone, the mobile phone may store many phone numbers and enable a user to search the stored phone numbers and make a phone call to a stored phone number by simply touching one or more keys. Therefore, due to the conveniences as described above, some users often utilize the mobile phone indoors also, instead of the wire telephone which requires the users to manually dial the phone number one key by one key.

Meanwhile, recent mobile phones each contain a Bluetooth module, so that a local area wireless communication can he made between mobile phones. The Bluetooth is a standard for enabling a wireless connection between mobile apparatuses such as portable PCs and mobile phones in a narrow area at a low cost. The Bluetooth enables voice and data to be exchanged without physical cables between various digital communication apparatuses by utilizing a wireless frequency. For example, the Bluetooth wireless technology may be realized in a mobile phone and a lap top computer, enabling them to be connected with each other without a cable. Also, in fact, all digital appliances such as PDAs (personal digital assistants), desktop computers, l'acsimile machines, keyboards, and joysticks can he a part of the Bluetooth system.

That is, the Bluetooth enables various communication equipments such as mobile phones, notebook computers, facsimile machines, and MP3 players to be connected with each other through a wireless link. Detail transmission standards proposed by the Bluetooth enable data to be provided with security and protected from interference. Further, Bluetooth systems may be manufactured in a form of small-sized microchip, so that they can be incorporated in communication systems. Moreover, the Bluetooth systems are so designed as to operate in a frequency hand of 2.4 GHz which is a worldwide compatible communication frequency band. The Bluetooth standard provides two electric power levels. Between them, the lower power level is an electric power level enough to enable wireless communication only within a room, and the higher power level is an electric power level enough to enable wireless communication within an entire house.

US 2001/0031645 describes a multi-purpose mobile cordless phone system. In the described phone system, a Bluetooth cordless phone is able to communicate via antennae with a transponder unit. When the transponder unit is physically connected via a multi-way connector to a base station, the system communicates via PSTN interface and cable connected to a local loop socket with a fixed telephone network. When the transponder is disconnected from the base station, the system communicates via external antennae by radio link with a local base station within a cellular phone network. The base station provides means to recharge the batteries of the cordless phone and the transponder unit via connectors.

"Specification of the Bluetooth System - Wireless connections made easy - Profiles - Version 1.1, Part K:3 Cordless telephony profile"; 22 February 2001 is a specification of the Bluetooth system which in particular refers to cordless telephony profiles. In particular it describes the profile stack and defines the requirements for each of the layers in the model for the cordless telephony profile. Additionally, document D2 describes the configuration and rules of the components involved in a Bluetooth system such as a gateway and terminal. It is outlined that a terminal may be for example, a cordless telephone, a dual mode cellular/cordless phone or a PC. Such a terminal may be connected via Bluetooth to the gateway so that incoming calls can be routed to the terminal and outgoing calls can be originated. Furthermore, a call can be made from a terminal to the user on the network to which the gateway is connected. Such a network may for example be a PSTN. Additionally, a call may be received from the network to which the gateway is connected. Upon arrival of an incoming call, or when a terminal wants to make an outgoing call, the gateway is put into active mode. The L2CAP channels are used for their TCS control signaling. Voice is transported using SCO links.

US-A-5 526 402 describes the radio personal communication system and method for initiating communications between a base station and a cellular terminal. In particular, document D3 describes a radio personal communication system, which includes a base station connected to a wire telephone network and a cellular terminal, operating within a region of a wide area cellular network to minimize interference between communications over the wide area cellular network and communications between the base station and the cellular terminal. This same cellular terminal may thus be used to communicate over the lower cost wire network when within the range of the base station and over the wide area cellular network otherwise.

Accordingly, the present invention has been made to solve the above-mentioned problems occurring in the prior art, and an object of the present invention is to provide an apparatus and a corresponding method thereof which has a construction modified from a conventional desktop battery charging apparatus so that the apparatus can be connected with a general wire telephone network and a mobile phone having a Bluetooth module, thereby enabling a mobile phone to be used not only for its own use but also as a cordless telephone.

This problem is solved by the subject matter of the independent claims. Preferred embodiments are defined by the subject matter of the dependent claims.

The above and other objects, features and advantages of the present invention will be more apparent from the following detailed description taken in conjunction with the accompanying drawings, in which:
FIG. 1 is a block diagram of a battery charging apparatus according to the first embodiment of the present invention:
FIG. 2 is a block diagram of a battery charging apparatus according to the second embodiment of the present invention:
FIG. 3 is a block diagram of a battery charging apparatus according to the third embodiment of the present invention;
FIG. 4 is a diagram showing a message flow in a process of pairing between a telephone gate and a combined cordless/mobile phone having a Bluctooth module according to an embodiment of the present invention;
FIG. 5 is a flowchart of a process of registering a Bluetooth mobile phone in a battery charging apparatus according to the present invention;
FIG. 6 is a flowchart of a cell processing procedure in a battery charging apparatus according to the present invention:
FIG. 7 is a flowchart of a call processing procedure in the case where the user responds to the incoming call through the Bluetooth mobile phone;
FIG. 8 is a flowchart of a call processing procedure in the case where the user responds to the incoming call through the wire telephone;
FIG. 9 is a flowchart of an operation of a Bluetooth mobile phone in a cordless telephone mode according to the present invention; and
FIG. 10 is a flowchart of an operation of a Bluetooth mobile phone according to the present invention in the case where the Bluetooth mobile phone originates a call through a public network.

Hereinafter, preferred embodiments of the present invention will be described with reference to the accompanying drawings. In the following description of the present invention, a detailed description of known functions and configurations incorporated herein will be omitted when it may make the subject matter of the present invention rather unclear.

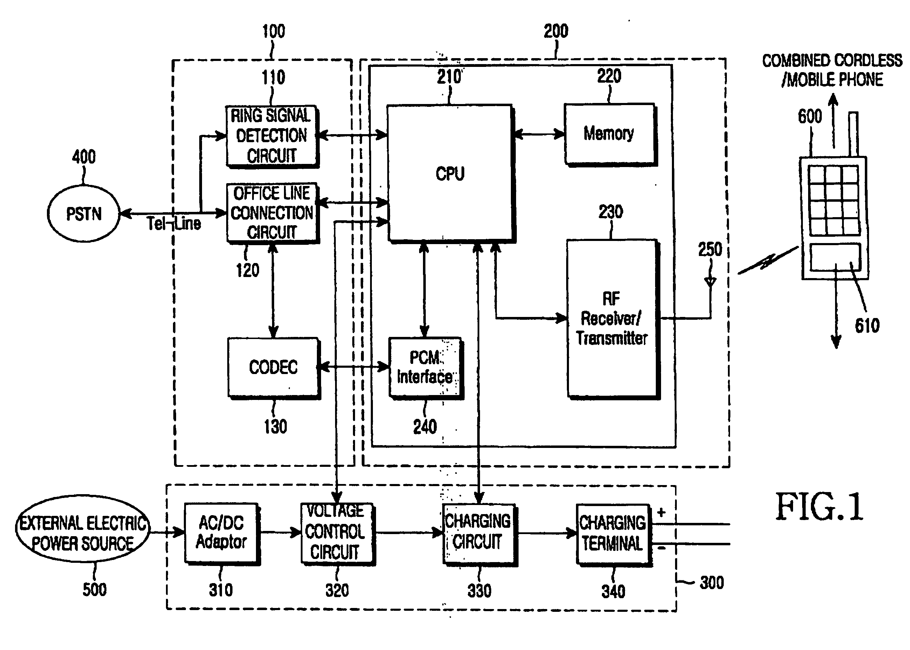

FIG. 1 is a block diagram of a battery charging apparatus according to the first embodiment of the present invention.

A battery charging apparatus according to the first embodiment of the present invention includes a telephone section 100, a Bluetooth section 200, and a charging section 300. The telephone section 100 includes a ring signal detection circuit 110 which is connected with a public network 400 and which detects a ring signal of a received call, an office line connection circuit 120 which interfaces a call command and an audio signal of a telephone, and a CODEC 130 which is connected between the Bluetooth section 200 and the office line connection circuit 120 so as to convert PCM data into analog voice and vice versa.

The telephone section 100 is connected between the public network 400 and the Bluetooth section 200 so as to interface an incoming call from the public network 400 to a combined cordless/mobile phone 600 through the Bluetooth section 200. Further, the telephone section 100 interfaces a call oriented from the combined cordless/mobile phone 600 to the public network 400 through the Bluetooth section 200. Specifically, the ring signal detection circuit 110 of the telephone section 100 is connected with a telephone line connected with the public network 400, so as to detect a ring signal received from the public network 400 and deliver the detected ring signal to the CPU 210 of the Bluetooth section 200. The office line connection circuit 120 of the telephone section 100 is connected between the telephone line connected with the public network 400 and the CPU 210 of the Bluetooth section 200, so as to interface the audio signal and call command received from or transmitted to the public network 400.

The Bluetooth section 200 of the battery charging apparatus includes a CPU 210, a memory 220, a PCM interface 240, and an RF receiver/transmitter 230 transmitting and receiving data through a Bluetooth antenna 250. The CPU 210 of the Bluetooth section 200 according to the present embodiment controls not only the Bluetooth section 200 but also the general operation of the telephone section 100 and the charging section 300. Specifically, in the present embodiment, the CPU 210 of the Bluetooth section 200 controls a charging circuit 330 and a voltage control circuit 320 of the charging section 300 and the ring signal detection circuit 110 and the office line connection circuit 120 of the telephone section 100. The memory 220 stores a program for controlling the CPU 210. The RF receiver/transmitter 230 is also connected with the CPU 210, so as to modulate/demodulate data. The Bluetooth section 200 further includes the Bluetooth antenna 250 connected with the RF receiver/transmitter 230 so as to transmit and receive data through RF wave.

Meanwhile, the charging section 300 includes an AC/DC adapter 310, a voltage control circuit 320, a charging circuit 330, and a charging terminal 340. The charging section 300 is connected with an external electric power source 500 so as to receive electric power from the external electric power source 500, and charges a battery when the battery is connected with the charging section 300. A detailed description about the construction and operation of the charging section 300 will be omitted here since they are similar to those of a common battery charging apparatus. According to the first embodiment of the present invention as described above, a mobile phone can be connected with a public network through a battery charging apparatus and can be used as a cordless telephone.

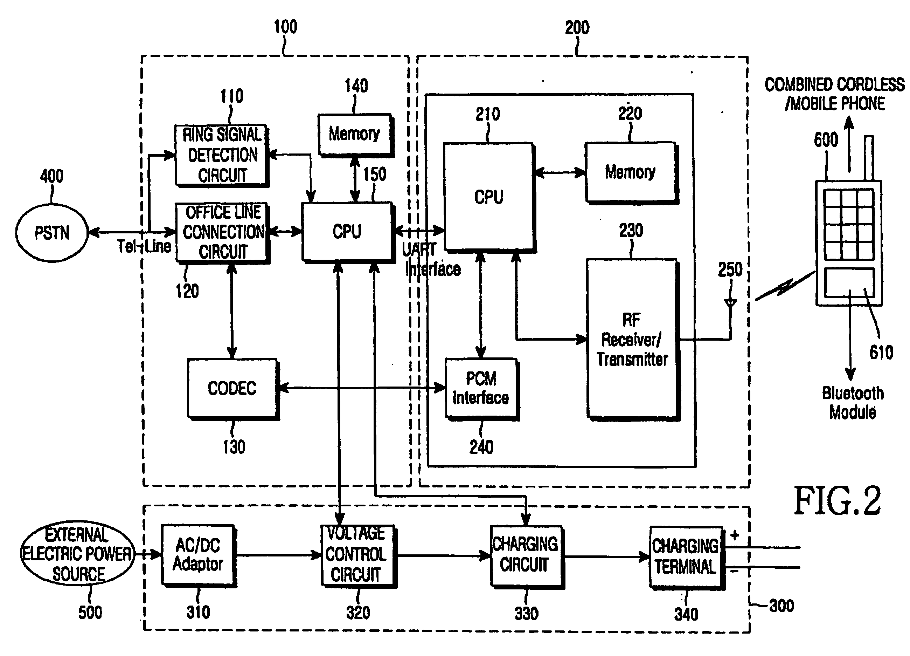

FIG. 2 is a block diagram of a battery charging apparatus according to the second embodiment of the present invention.

The battery charging apparatus according to the second embodiment of the present invention has the same construction as that in the first embodiment, excepting that the battery charging apparatus according to the present embodiment includes two CPUs. That is, in the battery charging apparatus according to the second embodiment, one CPU is included in the telephone section 100 while the other CPU is included in the Bluetooth section 200.

In more detailed description, all of the telephone section 100, although the Bluetooth section 200, and the charging section 300 are controlled by the CPU 210 of the Bluetooth section 200 in the first embodiment of the present invention, the Bluetooth section 200 is controlled by the CPU 210 of the Bluetooth section 200 while the telephone section 100 and the charging section 300 are controlled by a CPU 150 of the telephone section 100 in the second embodiment of the present invention. That is, the CPU 150 of the telephone section 100 controls the ring signal detection circuit 110 and the office line connection circuit 120 of the telephone section 100 and the voltage control circuit 320 and the charging circuit 330 of the charging section 300, while the CPU 210 of the Bluetooth section 200 controls the memory 220, the RF receiver/transmitter 230, and the PCM interface 240. These two CPUs transmit and receive data through a Universal Asynchronous Receiver-Transmitter (UART) interface.

The above-described battery charging apparatus according to the second embodiment of the present invention can be realized without significantly changing the constructions of a usual telephone and Bluetooth module and enables a mobile phone to he connected with a public network through a battery charging apparatus and thus be used as a cordless telephone.

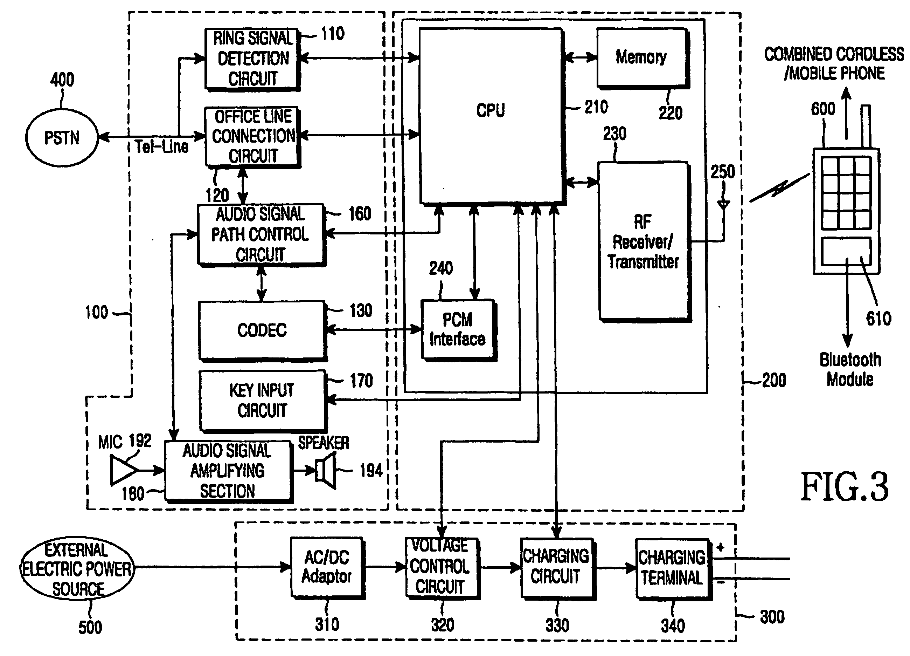

FIG. 3 is a block diagram of a battery charging apparatus according to the third embodiment of the present invention.

The battery charging apparatus according to the third embodiment of the present invention has the same construction as that in the first embodiment, except for the telephone section 100. The telephone section 100 of the battery charging apparatus according to the third embodiment of the present invention includes an audio signal path control circuit 160, a key input circuit 170, an audio signal amplifying section 180, a microphone 192, and a speaker 194, in addition to the construction of the telephone section 100 according to the first embodiment of the present invention. The microphone 192 and the speaker 194 together serve as a usual receiver of a telephone. The audio signal amplifying section 180 amplifies signals inputted and outputted through the microphone 192 and the speaker 194. The audio signal path control circuit 160 switches or synthesizes the signals inputted and outputted through the microphone 192 and the speaker 194 and signals inputted through the CODEC 130 from the Bluetooth section 200. Further, the key input circuit 170 enables the battery charging apparatus to dial for itself. As a result, the battery charging apparatus can function as a typical wire telephone. Therefore, the battery charging apparatus according to the third embodiment of the present invention not only can function as a usual wire telephone but also enables a mobile phone to be used as a cordless telephone.

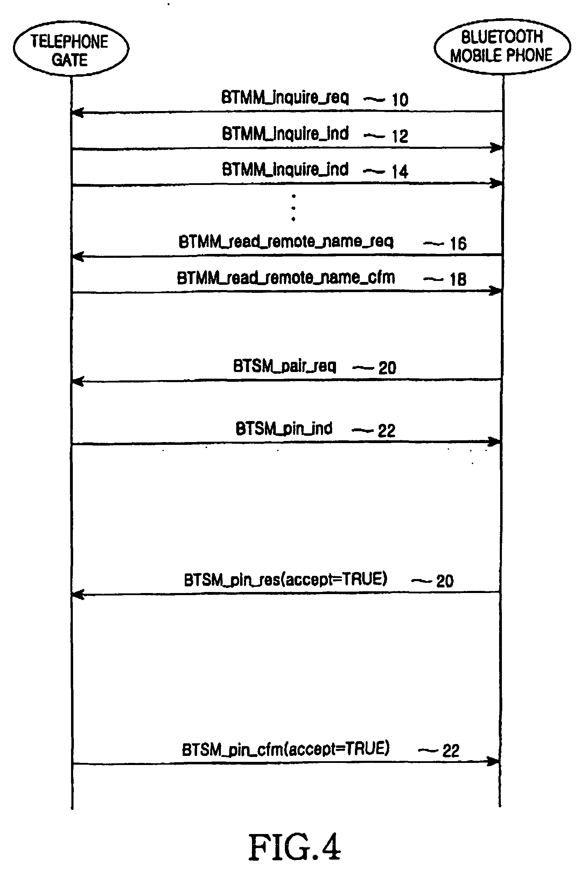

FIG. 4 is a diagram showing a message flow in a process of pairing between a telephone gate and a combined cordless/mobile phone having a Bluetooth module according to an embodiment of the present invention.

In order to connect a combined cordless/mobile phone through a Bluetooth communication with a battery charging apparatus connected with wire network so as to enable the mobile phone to he used as a cordless telephone, the mobile phone and the battery charging apparatus must be paired with each other in advance. In this case, the pairing signifies registration of a combined cordless/mobile phone in a battery charging apparatus, which can be connected with the battery charging apparatus through a Bluetooth communication. The most important object of the pairing is to present another phone from connecting with the battery charging apparatus and thereby connecting with the wire network. Hereinafter, the process of the pairing will he described.

First, in step 10, the mobile phone 600 transmits a registration request message BTMM_inquire_req in order to find out whether there exists a telephone gate around it or not. In response to the registration request message, in steps 12 and 14, a predetermined number of telephone gates or battery charging apparatuses transmit a response message BTMM_inquire_ind to the mobile phone. Then, in step 16, the mobile phone 600 transmits a message BTMM_read_remote_name_req to found telephone gates, which requests the found telephone gates to transmit their Bluetooth addresses. In step 18, the telephone gates transmit their Bluetooth addresses, so that the mobile phone 600 can obtain a list of the telephone gates found in its vicinity. Thereafter, in step 20, the mobile phone 600 transmits a Bluetooth message BTSM_pair_req to one telephone gate which a user wants to register, thereby selecting the telephone gate. In step 22, after receiving the message BTSM_pair_req, the selected telephone gate transmits a Bluetooth message BTSM_pin_ind to the mobile phone, thereby requesting a user authority certification which will be described hereinafter. The user authority certification can be classified into two cases in which the mobile is either with or without a key input section. In the case where the mobile phone has a key input section, the telephone gate requests a password for the selected telephone gate to the mobile phone. In the case where the mobile phone has no key input section, the telephone gate may request an action of turning off and then turning on the power of the mobile phone again or may check whether u Bluetooth mobile phone having dimensions meeting the standard of u desktop battery charging apparatus has been assembled with the desktop battery charging apparatus or not. Then, the mobile phone requests the user to input the password. When the user has inputted a Bluetooth pin BT_PIN number of the telephone gate, the mobile phone transmits a message BTSM_pin_res (accept = TRUE) containing the Bluetooth pin number to the telephone gate in step 24. The telephone gate determines whether the received Bluetooth pin number is correct or not. Thereafter, when the received Bluetooth pin number is correct, the telephone gate transmits a Bluetooth message BTSM_pin_cfm (accept = TRUE) informing that the registration has been completed to the Bluetooth mobile phone, and stores the Bluetooth address BD ADDR of the mobilc phone in a pairing list. After that time, the telephone gate allows office line communications only with Bluetooth mobile phones included in the pairing list, and the maximum number of mobile phones which may be included in the pairing list may be three.

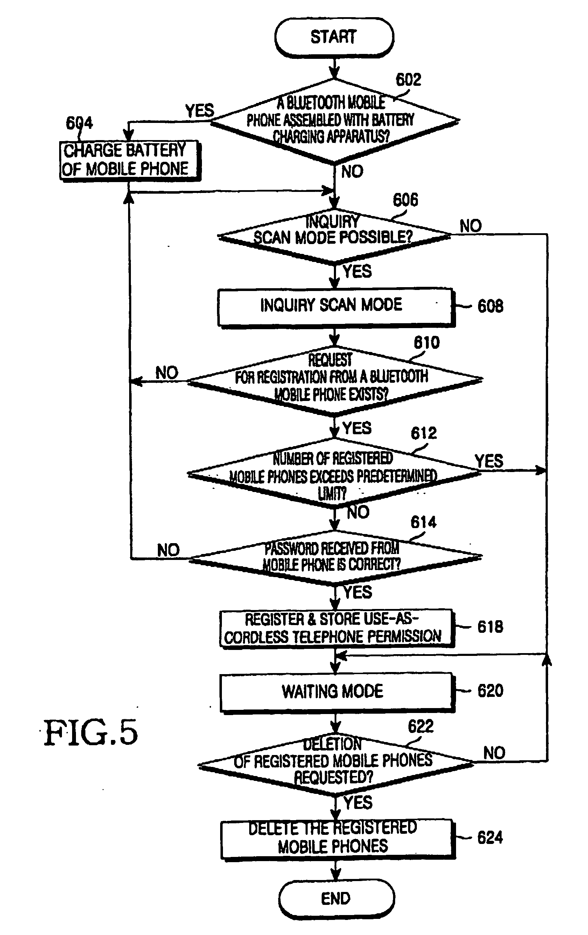

FIG. 5 is a flowchart of a process of registering a Bluetooth mobile phone in a battery charging apparatus according to the present invention.

First, the battery charging apparatus determines whether a Bluetooth mobile phone is assembled with the battery charging apparatus or not in step 602. When the Bluetooth mobile phone is assembled with the battery charging apparatus, the battery charging apparatus charges a battery of the mobile phone in step 604. When the Bluetooth mobile phone is not assembled with the battery charging apparatus, the process goes to step 606. In step 606, the battery charging apparatus judges whether it can enter an Inquiry scan mode or not. In this case, the Inquiry scan mode is defined by Bluetooth specification 1.0 and signifies a state where the battery charging apparatus can receive an inquiry from another Bluetooth apparatus and inform u Bluetooth address of the Bluetooth apparatus. This state in which the battery charging apparatus can enter the inquiry scan mode signifies the following states: first, a state in which a mobile phone having dimensions meeting the standard of the battery charging apparatus has been assembled with the battery charging apparatus; second, a state in which a predetermined period of time has not passed yet after a Bluetooth function key is pressed; and third, a state in which a predetermined period of time has not passed yet after a Bluetooth function key is pressed and a password for the battery charging apparatus is inputted (in the case where battery charging apparatus has a key input section), and a state in which a predetermined period of time has not passed yet after an electric power for the battery charging apparatus is turned on. As a result of the judgment, when the battery charging apparatus judges can enter the Inquiry scan mode, the battery charging apparatus enters the Inquiry scan mode in step 608. Thereafter, the battery charging apparatus judges whether there exists a request for registration from a Bluetooth mobile phone or not in step 610. When there exists a request for registration from a Bluetooth mobile phone, the battery charging apparatus determines whether the number of registered mobile phones exceeds a predetermined limit or not in step 612, and then determines whether the password received from the mobile phone is correct or not in step 614. When the password received from the mobile phone is correct, the battery charging apparatus registers and stores a use-as-cordless telephone permission so as to enable the mobile phone to be used as a cordless telephone in step 618. Thereafter, in step 620, the battery charging apparatus is in a waiting mode, so that a user can make a phone call by utilizing the mobile phone as a cordless telephone. When the user requests deletion of the registered mobile phones in step 622, the battery charging apparatus deletes the registered mobile phones in step 624.

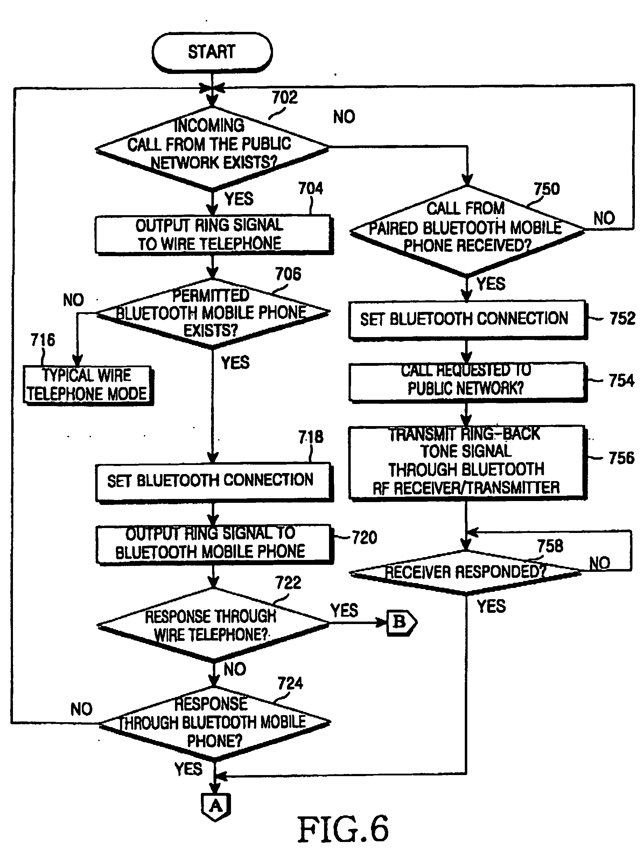

FIG. 6 is a flowchart of a call processing procedure in a battery charging apparatus according to the present invention. According to the present invention, the battery charging apparatus connects a call from the public network to a combined cordless/mobile phone u call from a combined cordless/mobile phone to the public network through the Bluctooth communication.

First, in step 702, the battery charging apparatus determines whether there exists an incoming call from the public network or not. When there exists an incoming call from the public network, the battery charging apparatus outputs a ring signal to a wire telephone in step 704. Then, in step 706, the battery charging apparatus judges whether there exists a Bluetooth mobile phone having a permission to be used as a cordless telephone or not. In this case, this judgment is carried out by determining whether or not there exists a Bluetooth mobile phone which has obtained the use-as-cordless telephone permission through the registering process.

When a Bluetooth mobile phone having the permission is in a cordless telephone mode, the battery charging apparatus sets a Bluetooth connection in step 718 and outputs a ring signal to the Bluetooth mobile phone in step 720. The battery charging apparatus judges whether the user responds to the incoming call through the wire telephone or not in step 722, and judges whether the user responds to the incoming call through the Bluetooth mobile phone or not in step 724. When the user responds to the incoming call through the wire telephone, a process B is initiated. In contrast, when the user responds to the incoming call through the Bluetooth mobile phone, a process A is initiated.

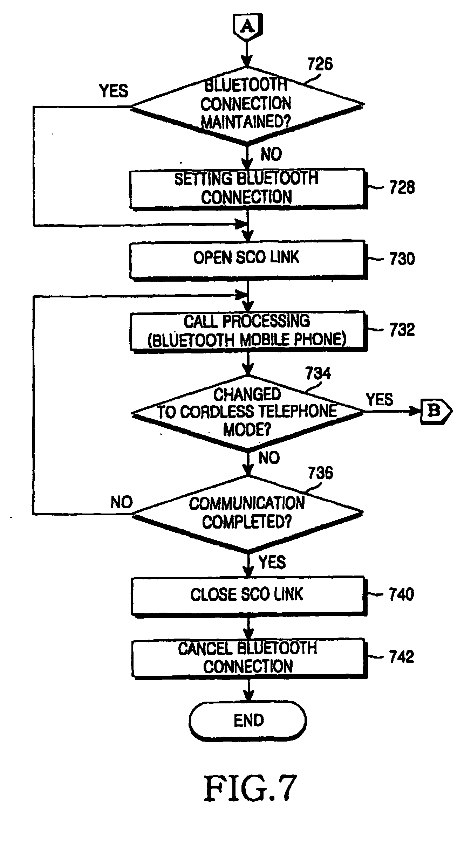

FIG. 7 is a flowchart of a call processing procedure in the case where the user responds to the incoming call through the Bluetooth mobile phone.

When the user responds to the incoming call through the Bluetooth mobile phone, the battery charging apparatus judges whether the Bluetooth connection is maintained or not in step 726. When the Bluetooth connection is not being maintained, the battery charging apparatus sets the Bluetooth connection again in step 728. When the Bluetooth connection is being maintained, the process goes to step 730. In step 730, the battery charging apparatus opens an SCO link between the battery charging apparatus and the Bluetooth mobile phone, so that the user can use the Bluetooth mobile phone in performing a communication through the public network. In other words, the battery charging apparatus opens the SCO link in step 730, thereby enabling the user to use the Bluetooth mobile phone as a cordless telephone in step 732. Thereafter, in step 734, the battery charging apparatus judges whether the user has changed the communication mode of the Bluetooth mobile phone to a cordless telephone mode or not. As a result of the judgment, when it is confirmed that the user has changed the communication mode of the Bluetooth mobile phone to the cordless telephone mode, the process B is initiated. In step 736, the battery charging apparatus judges whether the user has terminated communication or not. When the user has terminated the communication, the battery charging apparatus enters step 740. In contrast, when the user is performing the communication, the battery charging apparatus returns to step 732. When the communication has been terminated, the battery charging apparatus closes the SCO link in step 740, and then cancels the Bluetooth connection in step 742.

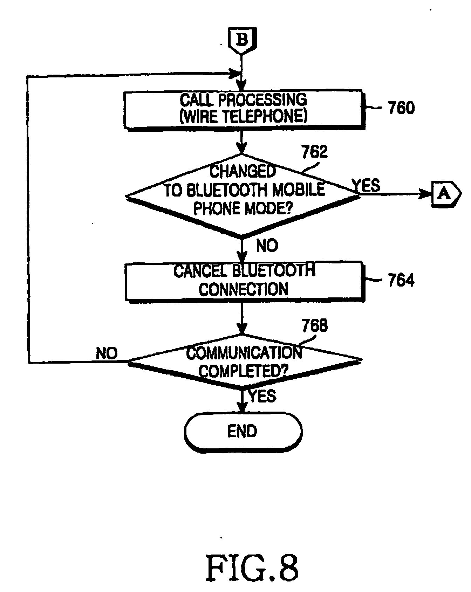

FIG. 8 is a flowchart of a call processing procedure in the case where the user responds to the incoming call through the wire telephone.

When the user responds to the incoming call through the wire telephone, the battery charging apparatus allows the user to continue a communication through the wire telephone in step 760. Thereafter, in step 762, the battery charging apparatus judges whether the user has changed a communication mode from a wire telephone mode to a Bluetooth mobile phone mode or not. When the user has changed the communication mode to the Bluetooth mobile phone mode, the battery charging apparatus enters the process A. In contrast, when the user continues the communication through the wire telephone, the battery charging apparatus cancels the Bluetooth connection in step 764. Thereafter, the battery charging apparatus determines whether the communication has been completed in step 768. The process returns to step 760 when the communication is being continued.

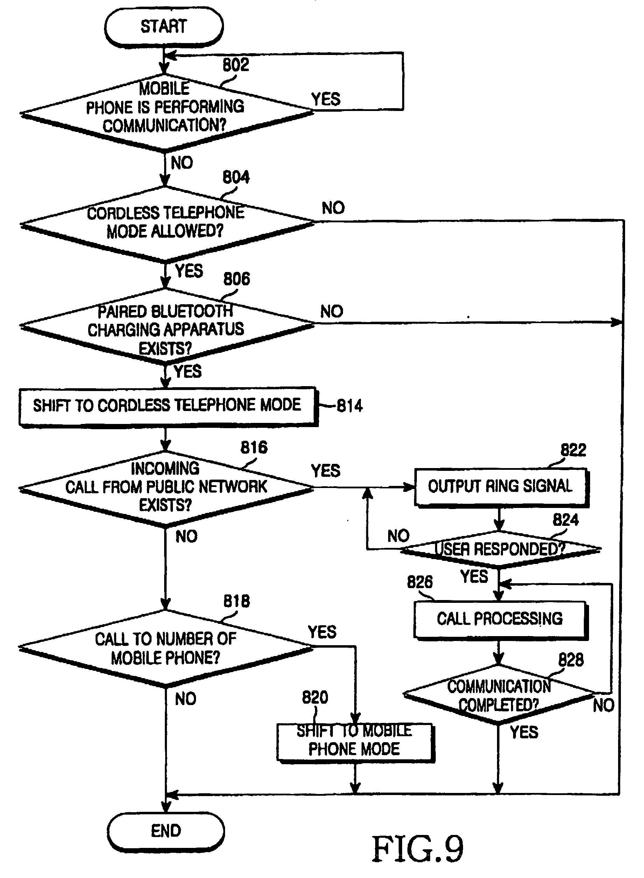

FIG. 9 is a flowchart of an operation of a Bluetooth mobile phone in a cordless telephone mode according to the present invention.

Firtst, the mobile phone 600 determines whether the mobile phone is performing a communication or not in step 802, and enters step 804 when the mobile phone is not used. In step 804, the mobile phone 600 determines whether a cordless telephone mode is allowed or not. Then, in step 806, the mobile phone 600 determines whether there exists any paired Bluetooth battery charging apparatus or not, and sets the mode of the Bluetooth mobile phone to the cordless telephone mode in step 814. After the cordless telephone mode is set, the mobile phone 600 determines whether there exists an incoming call from the public network in step 816. When there exists an incoming call from the public network, the mobile phone 600 outputs a ring signal in step 822. The mobile phone 600 determines whether the user responds to the incoming call in step 824, and processes the call in a general way in step 826. Thereafter, the mobile phone 600 determines whether the communication is completed or not in step 828, and the process is ended when the communication is completed.

In the case where there exists no incoming call from the public network according to the determination of the mobile phone 600 in step 816, the mobile phone 600 enters step 818 and judges whether there exists an incoming call to the number of the mobile phone or not. When there exists an incoming call to the number of the mobile phone, the mobile phone 600 shifts its mode to a mobile phone mode so that it can be used as a typical mobile phone.

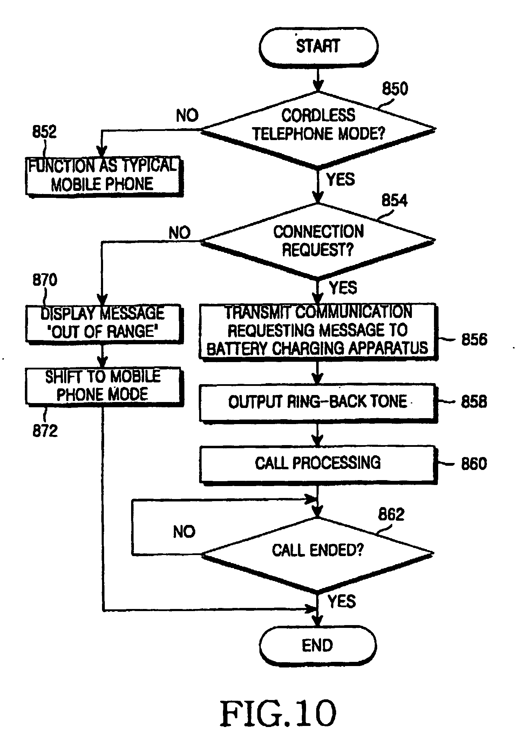

FIG. 10 is a flowchart of an operation of a Bluetooth mobile phone according to the present invention in the case where the Bluetooth mobile phone originates a call through a public network.

First, the mobile phone 600 determines whether it is in the cordless telephone mode or not in step 850. When the user wants to originate a call through a public network, the user can set the mode of the mobile phone 600 into the cordless telephone mode. When the mobile phone 600 is not in the cordless telephone mode, the mobile phone 600 can function as a typical mobile phone in step 852. In step 854, the mobile phone 600 requests the Bluetooth connection and judges whether the Bluetooth connection has been made or not. When the mobile phone 600 has been connected with the Bluetooth battery charging apparatus through the Bluetooth communication, the mobile phone 600 outputs a ring-back tone in step 858 and then processes the call in step 860. Thereafter, the mobile phone 600 determines whether the communication has been completed or not in step 862, and ends the process when the communication has been completed.

When it is confirmed from the judgment in step 854 that the mobile phone 600 has failed to connect with the Bluetooth battery charging apparatus, the mobile phone 600 displays a message, for example "out of range", in step 870. From this message, the user can move to an area in which the user can originate a call through u public network. Thereafter, in step 872, the mobile phone 600 converts its mode to a mobile phone mode, so that it can be used as a typical mobile phone.

## Claims

1. A battery charging apparatus for charging a battery of a mobile phone (600) the battery charging apparatus comprising a telephone section (100), a battery charging section (300) and a Bluetooth section (200), wherein:
the telephone section is connected between a public network (400) and the Bluetooth section in order to interface an incoming call from the public network to the mobile phone through the Bluetooth section and to interface an outgoing call from the mobile phone to the public network through the Bluetooth section; and
the Bluetooth section is connected between the telephone section and at least one mobile phone in order to transmit and receive wireless data
**characterized In that**
the battery charging apparatus further comprises registration means for determining a number of mobile phones registered with the Bluetooth section in order to limit the number of the mobile phones registered with the Bluetooth section to a predetermined number.

2. The battery charging apparatus as claimed in claim 1, wherein the telephone section comprises:
a ring signal detection circuit (110) which is connected with a public network and which detects a ring signal of a received call;
an office line connection circuit (120) which interfaces a call command and an audio signal of a telephone; and
a CODEC (130) which is connected between the Bluetooth section and the office line connection circuit so as to convert PCM data into analog voice and vice versa.

3. The battery charging apparatus as claimed in claim 1, wherein the Bluetooth section comprises:
a first control section (210) controlling an operation of the Bluetooth section;
a memory (220) storing a program for controlling the first control section;
a PCM interface circuit (240) connected with the telephone section so as to transmit and receive PCM data;
an RF receiver/transmitter (230) connected with the first control section so as to transmit and receive data through a Bluetooth antenna; and
an antenna (250) connected with the RF receiver/transmitter so as to transmit and receive data through RF wave.

4. The battery charging apparatus as claimed in claim 3, wherein the first control section of the Bluetooth section controls a battery-charging operation of the battery charging apparatus and an operation of the telephone section.

5. The battery charging apparatus as claimed in claim 3, wherein the telephone section comprises:
a second control section (150) controlling an operation of the telephone section;
a memory (140) storing a program for controlling the second control section;
a ring signal detection circuit (110) which is connected with a public network and which detects a ring signal of a received call;
an office line connection circuit (120) which interfaces a call command and an audio signal of a telephone; and
a CODEC (130) which is connected between the Bluetooth section and the office line connection circuit so as to convert PCM data into analog voice and vice versa.

6. The battery charging apparatus as claimed in claim 5, wherein the CODEC of the telephone section and the PCM interface circuit of the Bluetooth section interface voice in a PCM mode.

7. The battery charging apparatus as claimed in claim 5, wherein the first control section of the Bluetooth section and the second control section of the telephone section interface an HCl data packet.

8. The battery charging apparatus as claimed in claim 2, wherein the telephone section further comprises a key input section (170).

9. The battery charging apparatus as claimed in claim 2, wherein the telephone section further comprises a speaker (194) and a microphone (192).

10. A method of enabling at least one mobile phone (600) to be used as a cordless telephone by utilizing a battery charging apparatus, the battery charging apparatus including a Bluetooth section (200), the battery charging apparatus being connected with a public network (400) through a cable and with the at least one mobile phone via a Bluetooth interface so as to process calls, the method comprising the steps of:
detecting (702) an incoming call from the public network;
setting (718) a Bluetooth connection between the mobile phone and the battery charging apparatus;
outputting (720) a ring signal to the mobile phone; and
transmitting and receiving (760) voice data through the Bluetooth connection to thereby enable communication through the mobile phone, when there is a response from the mobile phone
**characterized in**
determining a number of mobile phones registered with the Bluetooth section in order to limit the number of the mobile phones registered with the Bluetooth section to a predetermined number.

11. A method of enabling at least one mobile phone (600) to be used as a cordless telephone by utilizing a battery charging apparatus, the battery charging apparatus including a Bluetooth section (200), the battery charging apparatus being connected with a public network (400) through a cable and with the at least one mobile phone via a Bluetooth interface so as to process calls, the method comprising the steps of:
detecting (750) an outgoing call from the mobile phone to the public network;
setting (752) a Bluetooth connection when there is a call from the mobile phone to the public network;
requesting (754) the call to the public network;
outputting (756) a ring-back tone signal through the mobile phone; and
transmitting and receiving (732) voice data through the Bluetooth connection to thereby enable communication through the mobile phone, when there is a response from the public network
**characterized in**
determining a number of mobile phones registered with the Bluetooth section in order to limit the number of the mobile phones registered with the Bluetooth section to a predetermined number.

## Patentansprüche

1. Batterieladevorrichtung zum Laden einer Batterie eines Mobiltelefons (600), wobei die Batterieladevorrichtung einen Telefonabschnitt (100), einen Batterieladeabschnitt (300) und einen Bluetooth-Abschnitt (200) umfasst, und
der Telefonabschnitt zwischen ein öffentliches Netz (400) und den Bluetooth-Abschnitt geschaltet wird, um einen eingehenden Ruf von dem öffentlichen Netz über den Bluetooth-Abschnitt zu dem Mobiltelefon zu koppeln und einen ausgehenden Ruf von dem Mobiltelefon über den Bluetooth-Abschnitt zu dem öffentlichen Netz zu koppeln; und
der Bluetooth-Abschnitt zwischen den Telefonabschnitt und wenigstens ein Mobiltelefon geschaltet ist, um Drahtlos-Daten zu senden und zu empfangen,
**dadurch gekennzeichnet, dass**:
die Batterieladevorrichtung des Weiteren eine Registriereinrichtung umfasst, die eine Anzahl von Mobiltelefonen bestimmt, die bei dem Bluetooth-Abschnitt registriert sind, um die Anzahl der Mobiltelefone, die bei dem Bluetooth-Abschnitt registriert sind, auf eine vorgegebene Anzahl zu begrenzen.

2. Batterieladevorrichtung nach Anspruch 1, wobei der Telefonabschnitt umfasst:
eine Anrufsignal-Erfassungsschaltung (110), die mit einem öffentlichen Netz verbunden ist und die ein Anrufsignal eines empfangenen Rufes erfasst;
eine Amtsleitungs-Verbindungsschaltung (120), die einen Rufbefehl und ein Audiosignal eines Telefons koppelt; und
einen CODEC (130), der zwischen den Bluetooth-Abschnitt und die Amtsleitungs-Verbindungsschaltung geschaltet ist, um PCM-Daten in analoge Sprache umzuwandeln und umgekehrt.

3. Batterieladevorrichtung nach Anspruch 1, wobei der Bluetooth-Abschnitt umfasst:
einen ersten Steuerabschnitt (210), der eine Funktion des Bluetooth-Abschnitts steuert;
einen Speicher (220), der ein Programm zum Steuern des ersten Steuerabschnitts speichert;
eine PCM-Schnittstellenschaltung (240), die mit dem Telefonabschnitt verbunden ist, um PCM-Daten zu senden und zu empfangen;
einen HF-Sender/Empfänger (230), der mit dem ersten Steuerabschnitt verbunden ist, um Daten über eine Bluetooth-Antenne zu senden und zu empfangen; und
eine Antenne (250), die mit dem HF-Empfänger/Sender verbunden ist, um Daten über HF-Welle zu senden und zu empfangen.

4. Batterieladevorrichtung nach Anspruch 3, wobei der erste Steuerabschnitt des Bluetooth-Abschnitts eine Batterieladefunktion der Batterieladevorrichtung und eine Funktion des Telefonabschnitts steuert.

5. Batterieladevorrichtung nach Anspruch 3, wobei der Telefonabschnitt umfasst:
einen zweiten Steuerabschnitt (150), der eine Funktion des Telefonabschnitts steuert;
einen Speicher (140), der ein Programm zum Steuern des zweiten Steuerabschnitts speichert;
eine Anrufsignal-Erfassungsschaltung (110), die mit einem öffentlichen Netz verbunden ist und die ein Anrufsignal eines empfangenen Rufes erfasst;
eine Amtsleitungs-Verbindungsschaltung (120), die einen Rufbefehl und ein Audiosignal eines Telefons koppelt; und
einen CODEC (130), der zwischen den Bluetooth-Abschnitt und die Amtsleitungs-Verbindungsschaltung geschaltet ist, um PCM-Daten in analoge Sprache umzuwandeln und umgekehrt.

6. Batterieladevorrichtung nach Anspruch 5, wobei der CODEC des Telefonabschnitts und die PCM-Schnittstellenschaltung des Bluetooth-Abschnitts Sprache in einem PCM-Modus koppeln.

7. Batterieladevorrichtung nach Anspruch 5, wobei der erste Steuerabschnitt des Bluetooth-Abschnitts und der zweite Steuerabschnitt des Telefonabschnitts ein HCI-Datenpaket koppeln.

8. Batterieladevorrichtung nach Anspruch 2, wobei der Telefonabschnitt des Weiteren einen Tasteneingabeabschnitt (170) umfasst.

9. Batterieladevorrichtung nach Anspruch 2, wobei der Telefonabschnitt des Weiteren einen Lautsprecher (194) und ein Mikrofon (192) umfasst.

10. Verfahren, mit dem wenigstens ein Mobiltelefon (600) in die Lage versetzt wird, als ein Schnurlostelefon verwendet zu werden, indem eine Batterieladevorrichtung genutzt wird, wobei die Batterieladevorrichtung einen Bluetooth-Abschnitt (200) enthält und die Batterieladevorrichtung mit einem öffentlichen Netz (400) über ein Kabel und mit dem wenigstens einen Mobiltelefon über eine Bluetooth-Schnittstelle verbunden ist, um Verbindungen abzuwickeln, und das Verfahren die folgenden Schritte umfasst:
Erfassen (702) eines eingehenden Rufes von dem öffentlichen Netz;
Einrichten (718) einer Bluetooth-Verbindung zwischen dem Mobiltelefon und der Batterieladevorrichtung;
Ausgeben (720) eines Anrufsignals an das Mobiltelefon; und
Senden und Empfangen (760) von Sprachdaten über die Bluetooth-Verbindung, um so Kommunikation über das Mobiltelefon zu ermöglichen, wenn eine Antwort von dem Mobiltelefon erfolgt,
**gekennzeichnet durch**
Bestimmen einer Anzahl von Mobiltelefonen, die bei dem Bluetooth-Abschnitt registriert sind, um die Anzahl der Mobiltelefone, die bei dem Bluetooth-Abschnitt registriert sind, auf eine vorgegebene Anzahl zu begrenzen.

11. Verfahren, mit dem wenigstens ein Mobiltelefon (600) in die Lage versetzt wird, als ein Schnurlostelefon verwendet zu werden, indem eine Batterieladevorrichtung genutzt wird, wobei die Batterieladevorrichtung einen Bluetooth-Abschnitt (200) enthält und die Batterieladevorrichtung mit einem öffentlichen Netz (400) über ein Kabel und mit dem wenigstens einen Mobiltelefon über eine Bluetooth-Schnittstelle verbunden ist, um Verbindungen abzuwickeln, und das Verfahren die folgenden Schritte umfasst:
Erfassen (750) eines abgehenden Rufs von dem Mobiltelefon zu dem öffentlichen Netz;
Einrichten (752) einer Bluetooth-Verbindung, wenn ein Ruf von dem Mobiltelefon zu dem öffentlichen Netz geht;
Anfordern (754) der Verbindung zu dem öffentlichen Netz;
Ausgeben (756) eines Rückruf-Tonsignals über das Mobiltelefon; und
Senden und Empfangen (732) von Sprachdaten über die Bluetooth-Verbindung, um so Kommunikation über das Mobiltelefon zu ermöglichen, wenn eine Antwort von dem öffentlichen Netz erfolgt,
**gekennzeichnet durch**
Bestimmen einer Anzahl von Mobiltelefonen, die bei dem Bluetooth-Abschnitt registriert sind, um die Anzahl der Mobiltelefone, die bei dem Bluetooth-Abschnitt registriert sind, auf eine vorgegebene Anzahl zu begrenzen.

## Revendications

1. Chargeur de batterie pour charger une batterie d'un téléphone mobile (600), le chargeur de batterie comprenant une section de téléphone (100), une section de charge de batterie (300) et une section Bluetooth (200), dans lequel :
la section de téléphone est connectée entre un réseau public (400) et la section Bluetooth afin de former l'interface entre un appel entrant provenant du réseau public et le téléphone mobile par l'intermédiaire de la section Bluetooth et de former l'interface entre un appel sortant du téléphone mobile et le réseau public par l'intermédiaire de la section Bluetooth ; et
la section Bluetooth est connectée entre la section de téléphone et au moins un téléphone mobile afin de transmettre et recevoir des données sans fil,
**caractérisé en ce que**
le chargeur de batterie comprend en outre un moyen d'enregistrement pour déterminer un nombre de téléphones mobiles enregistrés sur la section Bluetooth afin de limiter le nombre de téléphones mobiles enregistrés sur la section Bluetooth à un nombre prédéterminé.

2. Chargeur de batterie selon la revendication 1, dans lequel la section de téléphone comprend :
un circuit de détection de signal de sonnerie (110) qui est connecté à un réseau public et qui détecte un signal de sonnerie d'un appel reçu ;
un circuit de connexion de ligne de central (120) qui forme l'interface entre une commande d'appel et un signal audio d'un téléphone ; et
un CODEC (130) qui est connecté entre la section Bluetooth et le circuit de connexion de ligne de central afin de convertir des données PCM (Modulation d'Impulsions en Largeur) en une voix analogique et inversement.

3. Chargeur de batterie selon la revendication 1, dans lequel la section Bluetooth comprend :
une première section de commande (210) commandant le fonctionnement de la section Bluetooth ;
une mémoire (220) stockant un programme pour commander la première section de commande ;
un circuit d'interface PCM (240) connecté à la section de téléphone afin d'émettre et recevoir des données PCM ;
un récepteur/émetteur RF (230) connecté à la première section de commande de façon à émettre et recevoir des données par l'intermédiaire d'une antenne Bluetooth ; et
une antenne (250) connectée au récepteur/émetteur RF afin d'émettre et recevoir des données par l'intermédiaire d'ondes RF.

4. Chargeur de batterie selon la revendication 3, dans lequel la première section de commande de la section Bluetooth commande le fonctionnement de charge de la batterie du chargeur de batterie et le fonctionnement de la section de téléphone.

5. Chargeur de batterie selon la revendication 3, dans lequel la section de téléphone comprend :
une seconde section de commande (150) commandant le fonctionnement de la section de téléphone ;
une mémoire (140) stockant un programme pour commander la seconde section de commande ;
un circuit de détection de signal de sonnerie (110) qui est connecté à un réseau public et qui détecte un signal de sonnerie d'un appel reçu ;
un circuit de connexion de ligne de central (120) qui forme l'interface entre une commande d'appel et un signal audio d'un téléphone ; et
un CODEC (130) qui est connecté entre la section Bluetooth et le circuit de connexion de ligne de central afin de convertir des données PCM en une voix analogique et inversement.

6. Chargeur de batterie selon la revendication 5, dans lequel le CODEC de la section de téléphone et le circuit d'interface PCM de la section Bluetooth forment l'interface vocale dans un mode PCM.

7. Chargeur de batterie selon la revendication 5, dans lequel la première section de commande de la section Bluetooth et la seconde section de commande de la section de téléphone forment l'interface avec un paquet de données HCI (Host Controller Interface - Interface de Commande d'Hôte).

8. Chargeur de batterie selon la revendication 2, dans lequel la section de téléphone comprend en outre une section d'entrée par touches (170).

9. Chargeur de batterie selon la revendication 2, dans lequel la section de téléphone comprend en outre un haut-parleur (194) et un microphone (192).

10. Procédé permettant d'utiliser au moins un téléphone mobile (600) en tant que téléphone sans fil en utilisant un chargeur de batterie, le chargeur de batterie comportant une section Bluetooth (200), le chargeur de batterie étant connecté à un réseau public (400) par l'intermédiaire d'un câble et audit au moins un téléphone mobile par l'intermédiaire d'une interface Bluetooth afin de traiter des appels, le procédé comprenant les étapes consistant à :
détecter (702) un appel entrant provenant du réseau public ;
établir (718) une connexion Bluetooth entre le téléphone mobile et le chargeur de batterie ;
délivrer en sortie (720) un signal de sonnerie au téléphone mobile ; et
émettre et recevoir (760) des données vocales par l'intermédiaire de la connexion Bluetooth afin de permettre ainsi une communication par l'intermédiaire du téléphone mobile, lorsqu'une réponse provient du téléphone mobile,
**caractérisé en ce qu'**on détermine un nombre de téléphones mobiles enregistrés sur la section Bluetooth afin de limiter le nombre de téléphones mobiles enregistrés sur la section Bluetooth à un nombre prédéterminé.

11. Procédé permettant d'utiliser au moins un téléphone mobile (600) en tant que téléphone sans fil en utilisant un chargeur de batterie, le chargeur de batterie comportant une section Bluetooth (200), le chargeur de batterie étant connecté à un réseau public (400) par l'intermédiaire d'un câble et à au moins un téléphone mobile par l'intermédiaire d'une interface Bluetooth afin de traiter des appels, le procédé comprenant les étapes consistant à :
détecter (750) un appel sortant du téléphone mobile vers le réseau public ;
établir (752) une connexion Bluetooth lorsqu'un appel est transmis du téléphone mobile au réseau public ;
demander (754) l'appel au réseau public ;
délivrer en sortie (756) un signal de tonalité de rappel par l'intermédiaire du téléphone mobile ; et
émettre et recevoir (732) des données vocales par l'intermédiaire de la connexion Bluetooth pour permettre ainsi une communication par l'intermédiaire du téléphone mobile lorsqu'une réponse provient du réseau public,
**caractérisé en ce qu'**on détermine le nombre de téléphones mobiles enregistrés sur la section Bluetooth afin de limiter le nombre de téléphones mobiles enregistrés sur la section Bluetooth à un nombre prédéterminé.
